# EUROPEAN PATENT APPLICATION

(11) **EP 3 678 068 A1**
(43) Date of publication of application: **08.07.2020**
(21) Application number: 18852316.1
(22) Date of filing: 22.08.2018
(51) Int. Cl.: G06N 99/00

(54) **DISTRIBUTED SYSTEM FOR EXECUTING MACHINE LEARNING AND METHOD THEREFOR**

(30) Priority: 30.08.2017 CN 201710764494
(71) Applicant: The Fourth Paradigm (Beijing) Tech Co Ltd, Beijing 100085 (CN)
(72) Inventor: CHEN, Yuqiang, Beijing 100085 (CN); YANG, Qiang, Beijing 100085 (CN); DAI, Wenyuan, Beijing 100085 (CN); JIAO, Yingxiang, Beijing 100085 (CN); TU, Weiwei, Beijing 100085 (CN); SHI, Guangchuan, Beijing 100085 (CN)
(74) Representative: Hübner, Gerd
(86) International application number: PCT/CN2018/101694
(87) International publication number: WO 2019/042200

(57) **Abstract**

Provided is a distributed system for executing machine learning and a method therefor. The system comprises: a plurality of calculation devices, each calculation device being configured to record the data thereof so as to execute data flow calculation, wherein data flow calculation is expressed as one or more directed acyclic graphs; a parameter memory, which is used for maintaining the parameters of a machine learning module; when executing data flow calculation for training the machine learning module, the calculation devices record the respective data thereof and execute an operation relating to the training of the machine learning module by using parameters acquired from the parameter memory, and the parameter memory updates parameters according to an operation result of the calculation devices; and/or, when executing data flow calculation for using the machine learning module to perform prediction, the calculation devices record the respective data thereof and execute an operation relating to machine learning module prediction by using parameters acquired from the parameter memory.

## Description

### TECHNICAL FIELD

The exemplary embodiments of the present disclosure generally relate to a field of artificial intelligence, and more particularly to a distributed system that performs machine learning and a method of performing the machine learning using the distributed system.

### BACKGROUND

With the rapid growth of data scale, machine learning is widely used in various fields to mine the value of data. However, in order to perform the machine learning at the big data scale, it is often necessary in practice to use a distributed machine learning platform including a plurality of computing devices to complete training or corresponding prediction of a machine learning model.

In an existing distributed machine learning system (for example, a deep learning framework TensorFlow of Google), if it is intended to implement multiple configuration running or multiple times of running based on a certain machine learning algorithm, or if it is intended to implement a plurality of machine learning algorithms simultaneously, internal of the algorithm needs to be modified or multiple calls for external logic are implemented, both of which will consume a larger amount of actual computation.

### SUMMARY

Exemplary embodiments of the present disclosure are intended to overcome a drawback that an existing distributed machine learning system has a larger computational overhead when executing machine learning.

According to an exemplary embodiment of the present disclosure, a distributed system for executing machine learning is provided, comprising: a plurality of computing devices, wherein each computing device is configured to execute data streaming calculation on a machine learning model for respective data records, wherein the data streaming calculation is represented as one or more directed acyclic graphs consisting of processing steps, and each directed acyclic graph is corresponding to a single machine learning model; a parameter memory configured to maintain parameters of the machine learning model, wherein the computing device executes an operation on training of the machine learning model for the respective data records using the parameters acquired from the parameter memory when executing the data streaming calculation of training the machine learning model, and the parameter memory updates the parameters according to an operation result of the computing device; and/or, the computing device executes the operation on prediction of the machine learning model for the respective data records using the parameters acquired from the parameter memory when executing the data streaming calculation of making the prediction using the machine learning model.

According to another exemplary embodiment of the present disclosure, a method of executing machine learning using a distributed system is provided, wherein each of a plurality of computing devices in the distributed system is configured to execute data streaming calculation on a machine learning model for respective data records, wherein the data streaming calculation is represented as one or more directed acyclic graphs consisting of processing steps, and each directed acyclic graph is corresponding to a single machine learning model, the method comprising: acquiring the respective data records by each of the plurality of computing devices; acquiring parameters of the machine learning model from a parameter memory in the distributed system by the computing device; wherein an operation on training of the machine learning model is executed by the computing device for the respective data records using the acquired parameters when executing the data streaming calculation of training the machine learning model, and the parameters are updated by the parameter memory according to an operation result of the computing device; and/or, the operation on prediction of the machine learning model is executed by the computing device for the respective data records using the acquired parameters when executing the data streaming calculation of making the prediction using the machine learning model.

According to another exemplary embodiment of the present disclosure, a computer readable storage medium storing a computer program thereon is provided, wherein the computer program, when executed by a parameter memory and a plurality of computing devices, implements the method as described above.

According to another exemplary embodiment of the present disclosure, a system for executing machine learning is provided, wherein the system comprises at least one processor and at least one computer readable storage medium storing computer instructions, wherein the computer instructions, when executed by the at least one processor, cause the at least one processor to implement the method as described above.

In a distributed machine learning system and a method thereof according to an exemplary embodiment of the present disclosure, each computing device is configured to execute the data streaming calculation corresponding to one or more machine learning models so as to efficiently complete a machine learning operation under multiple models

### BRIEF DESCRIPTION OF THE DRAWINGS

These and/or other aspects and advantages of the present disclosure will become more apparent and be more easily understood from the following detailed description of embodiments of the present disclosure, taken in conjunction with the accompanying drawings.
FIG. 1 illustrates a block diagram of a distributed system that executes machine learning, according to an exemplary embodiment of the present disclosure;
FIG. 2 illustrates a block diagram of the distributed system that executes the machine learning, according to another exemplary embodiment of the present disclosure;
FIG. 3 illustrates a block diagram of a parameter server, according to an exemplary embodiment of the present disclosure;
FIG. 4 illustrates a block diagram of a computing device, according to an exemplary embodiment of the present disclosure;
FIG. 5 illustrates a flowchart of a method of executing training of a machine learning model by the distributed machine learning system, according to an exemplary embodiment of the present disclosure;
FIG. 6 illustrates a flowchart of a method of executing the training of the machine learning model by the distributed machine learning system, according to another exemplary embodiment of the present disclosure;
FIG. 7 illustrates a flowchart of a method of executing prediction of the machine learning model by the distributed machine learning system, according to an exemplary embodiment of the present disclosure;
FIG. 8 illustrates an example of executing data streaming calculation by merging directed acyclic graphs; and
FIG. 9 illustrates an example of storing parameters of the machine learning model in accordance with key-value pairs, according to an exemplary embodiment of the present disclosure.

### DETAILED DESCRIPTION

In order for those skills in the art to better understand the present disclosure, exemplary embodiments of the present disclosure are further described in detail in conjunction with the accompanying drawings and specific embodiments below. It needs to be explained here that "and/or" appearing in the present disclosure means that three juxtaposition cases are included. For example, "including A and/or B" means the following three juxtaposition cases: (1) including A; (2) including B; (3) including A and B. For another example, "executing step one and/or step two" means the following three juxtaposition cases: (1) executing step one; (2) executing step two; (3) executing step one and step two.

The machine learning is an inevitable outcome of the development of artificial intelligence research to a certain stage, which is dedicated to improving the performance of a system itself using experience by means of calculation. In a computer system, "experience" usually exists in a form of "data" and a "model" may be generated from the data through a machine learning algorithm. The model may be expressed as a certain algorithm function under specific parameters. That is, if experience data is provided to the machine learning algorithm, the model can be generated based on these experience data, i.e., parameters of function are learned based on the data, and in the face of a new situation, the model will provide a corresponding judgment, that is, a prediction result. The machine learning may be implemented in a form of "supervised learning", "unsupervised learning" or "semi-supervised learning". It should be noted that exemplary embodiments of the present disclosure do not impose any particular limitation on a specific machine learning algorithm. In addition, it should also be noted that statistical algorithms, business rules and/or expert knowledge and the like may also be utilized in the process of training the machine learning model to further improve effect of the machine learning.

Specifically, exemplary embodiments of the present disclosure relate to a distributed machine learning system that may include a parameter memory and a plurality of computing devices, wherein the plurality of computing devices distributively perform the machine learning algorithm for respective data records, and accordingly, the parameter memory maintains parameters of the machine learning model by interacting with respective computing device. It should be noted that the computing device and/or the parameter memory mentioned here are defined by the processing that they execute or the functions that they implement, may indicate either a physical entity or a virtual entity, for example, the computing device may indicate an actual computing machine or a logical entity deployed on the computing machine, likewise, the parameter memory may indicate either the actual computing machine or the logical entity deployed on the computing machine. The parameter memory may be a separate device and may also be combined with the computing device. For example, the parameter memory may be deployed on the same or different computing machine with the computing device, and may even be directly acted by some computing devices

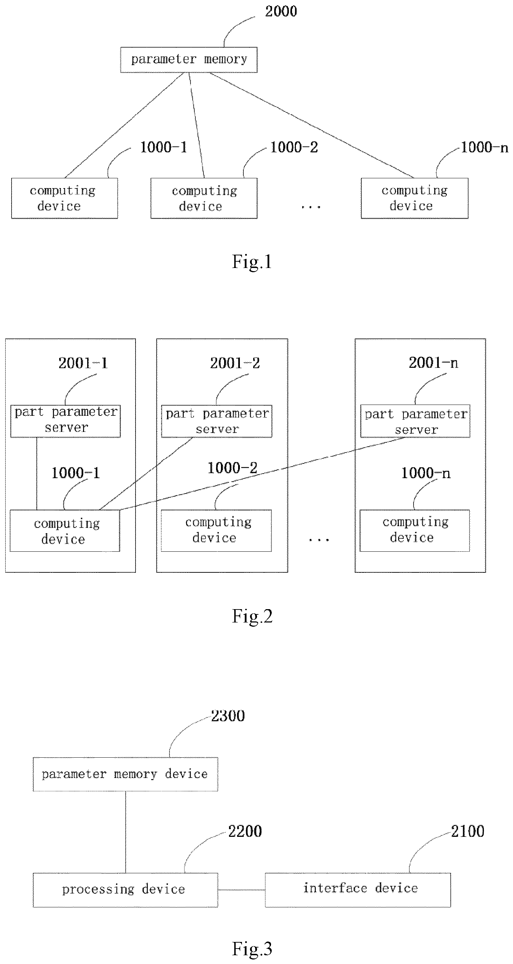

FIG. 1 illustrates a block diagram of a distributed system that executes machine learning, according to an exemplary embodiment of the present disclosure. Specifically, the distributed machine learning system illustrated in FIG. 1 may include a parameter memory 2000 and a plurality of computing devices 1000 (e.g., 1000-1, 1000-2, ···, 1000-n (where n is an integer greater than 1)). The distributed machine learning system may be configured to train a machine learning model and/or make prediction using the trained machine learning model.

Specifically, each computing device 1000 is configured to execute data streaming calculation on the machine learning model for respective data records, wherein the data streaming calculation is represented as one or more directed acyclic graphs consisting of processing steps, and each directed acyclic graph is corresponding to a single machine learning model.

As an example, respective computing device 1000 may acquire a portion of the data records that need to be processed from a data source (e.g., a location accessible by all computing devices such as a cloud disk, and the like on network), respectively, and execute the data streaming calculation for the acquired portion of the data records; or, in the case where the amount of the data is smaller, the respective computing device 1000 may also acquire all of the data records from the data source at one time, and execute the data streaming calculation for a portion of the data records, respectively. According to an exemplary embodiment of the present disclosure, the respective computing device 1000 may execute the same computing task, except that the data records for which they are directed are different; or the respective computing device 1000 may execute different computing tasks, and accordingly, the data records processed by the respective computing device 1000 are not the same. Here, the data records may be regarded as a result acquired by executing row division or column division on an original data record table (in the original data record table, one row is corresponding to one original data record, and one column is corresponding to one attribute information), that is to say, the data records correspond to part (in the case of the column division) or all (in the case of the row division) of the parameters of the machine learning model.

Here, the data streaming calculation refers to a streaming calculation task that the respective computing device 1000 needs to execute, which may be a collection of certain processes that need to be executed in order to train the machine learning model and/or make the prediction using the machine learning model. According to an exemplary embodiment of the present disclosure, the data streaming calculation may be represented as one or more directed acyclic graphs consisting of processing steps. That is, the data streaming calculation may indicate a calculation process represented by a single directed acyclic graph; in addition, the data streaming calculation may also indicate the calculation process represented by a plurality of directed acyclic graphs. Here, each directed acyclic graph may correspond to a single machine learning model, and correspondingly, the distributed machine learning system may simultaneously execute training/prediction of a plurality of machine learning models by simultaneously executing the plurality of directed acyclic graphs by the computing device, for example, multiple running of a model in multiple configurations may be completed simultaneously in a model parameter tuning phase. As can be seen, the distributed machine learning system according to an exemplary embodiment of the present disclosure may simultaneously execute multiple configuration operations of a certain machine learning algorithm process or simultaneously execute a plurality of machine learning algorithm processes. The processing steps constituting the data streaming calculation include not only operation steps but also other various processing steps (for example, acquisition of the data, output of an operation result, etc.).

The parameter memory 2000 is configured to maintain the parameters of the machine learning model. As mentioned above, the machine learning model may be considered as a function on features of a machine learning sample, and specifically, by continuously iteratively training for all of the data records, the machine learning model may be gradually converged to a parameter optimal solution of the function. According to an exemplary embodiment of the present disclosure, the parameter memory 2000 is configured to maintain the parameters of the machine learning model such that the computing device 1000 may acquire corresponding parameters by interacting with the parameter memory 2000 when executing the data streaming calculation, on the other hand, in a training phase of the machine learning model, the parameter memory 2000 may also update the parameters based on an operation result of respective computing devices 1000. That is to say, the computing device 1000 executes an operation on the training of the machine learning model for the respective data records using the parameters acquired from the parameter memory 2000 when executing the data streaming calculation of training the machine learning model, and the parameter memory 2000 updates the parameters according to the operation result of the computing device 1000; and/or, the computing device 1000 executes the operation on prediction of the machine learning model for respective data records using the parameters acquired from the parameter memory 2000 when executing the data streaming calculation of making the prediction using the machine learning model. Here, the computing device 1000 can execute a corresponding distributed operation according to a division manner (the row division and/or column division) of the original data record table.

As an example, the parameter memory 2000 may be deployed on a single computing machine; or, the parameter memory 2000 can be deployed on multiple related computing machines simultaneously. For example, the parameter memory 2000 may have a structure of distributed parameter servers, the effect of which is equivalent to a global hash table, and each part parameter server stores a part of key-value pairs with regard to the parameters, however, the key-value pairs on respective part of the parameter memory have no intersection. As an example, the parameter memory 2000 may store the parameters of the machine learning model in accordance with the key-value pairs, and the key-value pairs having the same key are stored in a form in which a single key corresponds to a plurality of values.

According to an exemplary embodiment of the present disclosure, the data records from the data source (e.g., a remote network) may be first divided into different sets so as to be stored in a local hard disk or a memory of the computing device 1000, respectively, and correspondingly, a corresponding machine learning computing task may be independently completed by executing the data streaming calculation on local data by the respective computing device 1000, thereby greatly reducing overhead of data reading and writing.

As an example, when the machine learning model is smaller, the each computing device 1000 may separately store a set of complete parameters locally, however, when the machine learning model is larger, the parameters can be discretely stored in multiple locations. According to an exemplary implementation of the present disclosure, the parameter memory 2000 may have the structure of the distributed parameter servers in which each part parameter server is integrated with a corresponding computing device 1000.

FIG. 2 illustrates a block diagram of a distributed system that executes machine learning, according to another exemplary embodiment of the present disclosure. In a distributed machine learning system shown in FIG. 2, corresponding to each computing device 1000, there is a corresponding part parameter server 2001. Specifically, the computing device 1000-1 may be integrated on the same virtual machine or physical machine with the part parameter server 2001-1, and the computing device 1000-2 may be integrated on the same virtual machine or physical machine with the part parameter server 2001-2, by that analogy, the computing device 1000-n may be integrated on the same virtual or physical machine with the part parameter server 2001-n. In the distributed machine learning system, the each computing device 1000 may locally use parameters maintained by the corresponding part parameter server 2001 integrated with it in order to execute data streaming calculation, in addition, the computing device 1000 also needs to use the parameters maintained by other part parameter servers 2001, for this purpose, the computing device 1000 needs to interact with the other part parameter servers 2001 to obtain all parameters required for executing the data streaming calculation.

It can be seen that in the distributed machine learning system according to an exemplary embodiment of the present disclosure, in addition to having a plurality of computing devices, a parameter memory may also have a structure of distributed parameter servers, i.e., there are a plurality of part parameter servers. In this case, by executing the data streaming calculation involving one or more models by the computing device, implementation of large-scale machine learning can be ensured, so that a better machine learning effect can be realized by improvement of feature dimension and increase of the amount of data.

FIG. 3 illustrates a block diagram of a parameter memory according to an exemplary embodiment of the present disclosure. Here, the parameter memory shown in FIG. 3 may be a separate machine as a whole or a part parameter server under a structure of distributed parameter servers.

Referring to FIG. 3, the parameter memory may include an interface device 2100, a processing device 2200, and a parameter memory device 2300.

Specifically, the interface device 2100 may be configured to interact with the computing device 1000 to transfer instructions and/or data related to the machine learning, wherein the data may be various related data such as parameters of the machine learning model, an operational result for updating the parameters, and the like. Here, the interface device 2100 may receive an instruction requesting acquisition of the parameters from the computing device 1000, and may also receive the operation result for updating the parameters and a related instruction from the computing device 1000; in addition, the interface device 2100 may also transmit corresponding parameters to the computing device 1000.

The processing device 2200 can execute processing to update and/or provide the parameters according to the instructions and/or the data received by the interface device 2100, wherein the parameters are stored by the parameter memory device 2300. As an example, the processing device 2200 may analyze the instruction requesting the acquisition of the parameters from the computing device 1000 and then provide the corresponding parameters from the parameter memory device 2300 to the interface device 2100, and then the parameters are provided to the computing device 1000 by the interface device 2100. Or, the processing device 2200 may analyze the operation result for updating the parameters and the related instruction from the computing device 1000, execute updating of the parameters according to a corresponding parameter update manner, and store the updated parameters in the parameter memory device 2300.

The parameter memory device 2300 is configured to store the parameters of the machine learning model. As an example, the parameter memory 2300 may store the parameters in a form of key-value pairs. According to an exemplary implementation of the present disclosure, for a plurality of sets of configurations of a model or for a plurality of models, the form that a single key corresponds to a plurality of values may be used to store the corresponding parameters.

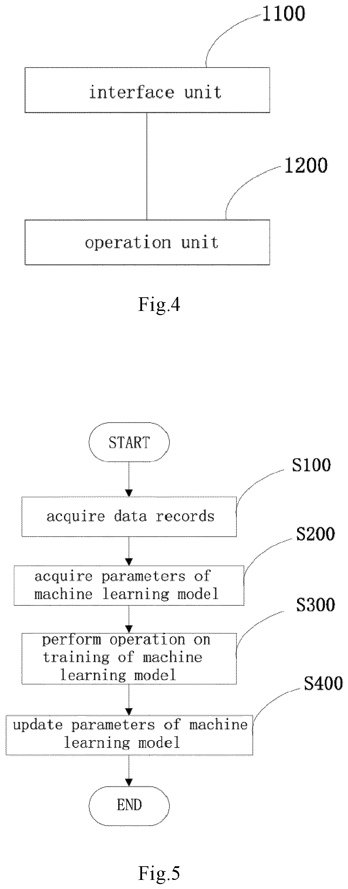

FIG. 4 illustrates a block diagram of a computing device according to an exemplary embodiment of the present disclosure. Referring to FIG. 4, the computing device 1000 may include an interface unit 1100 and an operation unit 1200.

Specifically, the interface unit 1100 may be configured to interact with the parameter memory (e.g., the part parameter server 2001) to transfer instructions and/or data related to the machine learning, wherein the data may be various related data such as parameters of a machine learning model, an operation result for updating the parameters, and the like. Here, the interface unit 1100 may transmit an instruction requesting acquisition of the parameter to the parameter memory and receive the requested parameters from the parameter memory; in addition, the interface unit 1100 may further provide an operation result for updating the parameters and a related instruction to the parameter memory. As an example, the interface unit 1100 may also be configured to acquire the data records that desire to be processed from the data source, or to back up a phased operation result to another device.

The operation unit 1200 is configured to execute the data streaming calculation for the data records using the parameters of the machine learning model. Here, the operation unit 1200 can execute various specific operations with regard to the training and/or the prediction of the machine learning model involved in the data streaming calculation. As described previously, according to an exemplary embodiment of the present disclosure, the data streaming calculation may be represented as one or more directed acyclic graphs consisting of processing steps (each directed acyclic graph corresponds to a single machine learning model), for example, in a training phase of the machine learning model, it is often necessary to train a model under multiple sets of configurations in order for model tuning, in this case, if multiple sets of training of the model are desired to be performed at the same time, the data streaming calculation may include multiple directed acyclic graphs with different configurations. Accordingly, a result obtained by executing the operations by the operation unit 1200 may be delivered to the parameter memory or other devices via the interface unit 1100. It should be noted that the composition of the data streaming calculation is not limited to the above examples, but may include any single directed acyclic graph or a combination of different directed acyclic graphs, for example, the data streaming computation may indicate training process of one or more machine learning models and/or prediction process of making the prediction using the one or more machine learning models. In an prediction phase of the machine learning model, the result obtained by executing the operations by the operation unit 1200 may be used as a prediction value for a corresponding data record.

FIG. 5 illustrates a flowchart of a method of executing training of the machine learning model by the distributed machine learning system, according to an exemplary embodiment of the present disclosure. The steps involved in the method may be executed by the computing device and/or the parameter memory (e.g., the part parameter server 2001) in the distributed machine learning system as previously described, for example, may be executed according to a pre-set configuration by the computing device and/or the parameter server, wherein each of the plurality of computing devices in the distributed system is configured to execute the data streaming calculation on the training of the machine learning model for respective data records, wherein the data streaming calculation is represented as one or more directed acyclic graphs consisting of processing steps, and each directed acyclic graph is corresponding to a training task of a single machine learning model.

Referring to FIG. 5, in step S100, the respective data records are acquired by each of the plurality of computing devices. The data record here indicates a historical data record for the training of the model, having a corresponding label in the case of the supervised learning. For example, respective computing device may first read the data records to be processed by itself from the data source, respectively, and there is no intersection between the data records read by the computing devices, that is, each computing device is assigned a part of overall data records, and then does the same or different training tasks together. After the computing device has read the data records locally for storage, the corresponding data records may be directly acquired locally when the related operation processing needs to be executed later.

Next, in step S200, the parameters of the machine learning model are acquired from the parameter memory in the distributed system by the computing device. Here, the respective computing device may acquire all required parameters from a single parameter memory; or, in the case where the parameter memory has a structure of distributed parameter servers, the computing device needs to acquire additional parameters from other part parameter servers in addition to acquiring the parameters from a part parameter server integrated with the computing device.

In step S300, an operation on the training of the machine learning model is executed for the respective data records using the acquired parameters by the computing device. Here, the computing device may complete operation steps involved in the data streaming calculation based on the previously acquired data record and parameters.

In step S400, the parameters are updated according to an operation result of the computing device by the parameter memory. Here, according to factors such as a machine learning algorithm and design of a distributed framework and so on, the parameter memory may update the parameters in accordance with a certain frequency. For example, every time after the operation of one data record is completed, the respective computing device can summarize the operation result into the parameter memory, and the parameter memory executes the updating of the parameters according to a predetermined update manner. Furthermore, the frequency of the updating of the parameters is not limited to one piece of data, for example, the parameters may be updated based on a batch of data or the operation result of a round of iteration.

It should be noted that the steps in FIG. 5 are not limited to a specific execution order. For example, those skilled in the art should understand that in the process of executing iterative operations on a large number of data records, it is often necessary to acquire the data records and/or the parameters externally or locally multiple times.

When the machine learning model obtained by the training is relatively smaller, one complete set of model parameters may be stored separately on each computing entity. However, when the machine learning model is relatively larger, the model parameter needs to be stored in a plurality of part parameter servers in blocks. Since the computing device needs to access data multiple times when executing an operation task, it is necessary to set an appropriate disaster backup measure. Unlike a processing method of frequently executing the disaster backup in the prior art, according to an exemplary implementation of the present disclosure, the disaster backup is executed for each round iteration of the data records when executing the data streaming calculation of training the machine learning model. Through this specific disaster backup method, operation efficiency may be greatly increased while a disaster backup goal is achieved.

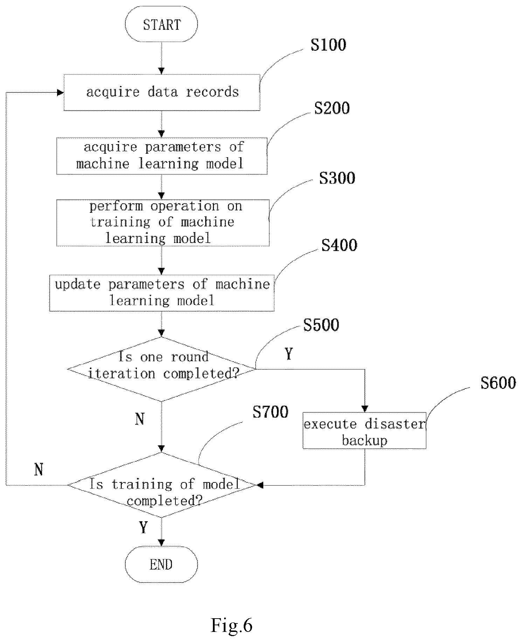

FIG. 6 illustrates a flow chart of a method of executing the training of the machine learning model by the distributed machine learning system, according to another exemplary embodiment of the present disclosure. In the method shown in FIG. 6, the disaster backup is executed in accordance with each round of iteration, and steps S100, S200, S300, and S400 therein are similar to corresponding steps shown in FIG. 5, and details will not be described herein.

Referring to FIG. 6, in step S500, it is determined whether one round iteration training is executed for all data records. If the one round iteration has not been completed, the method proceeds to step S700. If it is determined that the one round iteration is completed, in step S600, currently obtained model parameters are backed up, for example, the currently obtained model parameters may be additionally cross-stored among a plurality of part parameter servers, i.e., each part parameter server additionally stores parameters maintained by other parameter servers in addition to maintain its own part of the parameters; or, the parameters may be backed up on other devices other than the parameter memory. Here, one or more copies of the currently obtained model parameters may be backed up to ensure implementation of the disaster backup.

In step S700, it is determined whether the training of the machine learning model is completed, and if the training is completed, the machine learning model composed of the parameters is obtained. Otherwise, the method returns to step S100 to continue to acquire new data records. Here, according to the previous process, the new data records may be the data records that are continuously acquired when a current round iteration has not been completed, or may be the data records retrieved when the current round iteration is completed. These data records may come from an external data source or from the computing device in local.

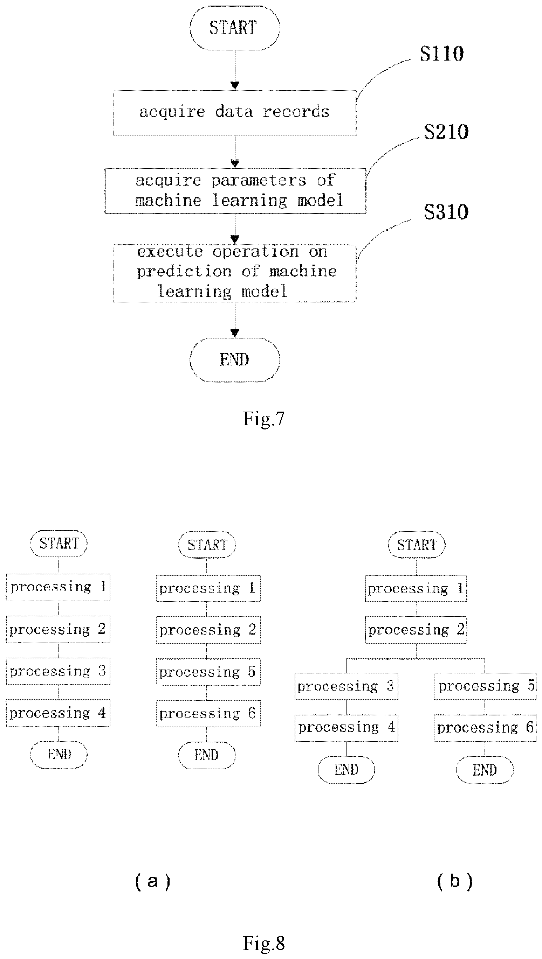

FIG. 7 illustrates a flow chart of a method of executing prediction of the machine learning model by the distributed machine learning system, according to an exemplary embodiment of the present disclosure. The steps involved in the method may be executed by the computing device and/or the parameter memory (e.g., the part parameter server 2001) in the distributed machine learning system as previously described, for example, may be executed according to a pre-set configuration by the computing device and/or the parameter server, wherein each of the plurality of computing devices in the distributed system is configured to execute the data streaming calculation on the prediction of the machine learning model for respective data records, wherein the data streaming calculation is represented as one or more directed acyclic graphs consisting of processing steps, and each directed acyclic graph is corresponding to a training task of a single machine learning model.

Referring to FIG. 7, in step S110, the respective data records are acquired by each of the plurality of computing devices. The data records here indicate the data records for model prediction (or testing). Respective computing device may read the data records to be processed by itself from the data source, respectively, and there is no intersection between the data records read by the computing devices, that is, each computing device is assigned a part of overall data records, and then does the same or different prediction tasks together.

Next, in step S210, the parameters of the machine learning model are acquired from the parameter memory in the distributed system by the computing device. Here, the respective computing device may acquire all required parameters from a single parameter memory; or, in the case where the parameter memory has a structure of distributed parameter servers, the computing device needs to acquire additional parameters from other part parameter servers in addition to acquiring the parameters from the part parameter server integrated with the computing device.

In step S310, an operation on the prediction of the machine learning model is executed for the respective data records using the acquired parameters by the computing device. Here, the computing device may complete operation steps involved in the data streaming calculation based on the previously acquired data record and parameters.

The method of executing the machine learning by the distributed machine learning system according to an exemplary embodiment of the present disclosure is described above with reference to FIGS. 5 through 7, here, some specific operations or other processes may be packaged as callable functions, for example, the processes such as synchronous wait, data merge, and broadcast interaction and so on in data streaming calculation may be packaged as the callable functions. The above manner allows programmers to call the callable functions directly when needed, which is helpful to the programmers to focus on distributed implementation logic and effectively control algorithms without implementing complex underlying logic.

In addition, it should be noted that although various steps in the processing flow are sequentially shown in the method flow charts of FIGS. 5 to 7, it should be noted that execution order of respective steps is not limited to chronological order, and may be executed simultaneously or in different orders. For example, in the case where the computing device and its corresponding part parameter server are integrated into a single computing machine, the computing device may first utilize local parameters to complete corresponding operations, and then acquire other parameters from the part parameter servers on other computing machines by a communication function of the system, thereby completing remaining operations based on the other parameters.

According to an exemplary embodiment of the present disclosure, when the computing device executes the data streaming calculation, if the data streaming calculation involves a plurality of directed acyclic graphs, the computing device may execute the data streaming calculation by merging the same processing steps in different directed acyclic graphs. For example, the computing device may reduce the amount of computation by merging the same processing steps in the directed acyclic graphs staring from upstream, such that the time of running of multiple tasks is less than the sum of the time of running respective task individually.

FIG. 8 illustrates an example of executing the data streaming calculation by merging directed acyclic graphs, according to an exemplary embodiment of the present disclosure. (a) in FIG. 8 illustrates the directed acyclic graph showing the data streaming calculation that computing devices needs to execute, that is, the computing devices all need to execute computing tasks as shown in (a) of FIG. 8. Specifically, the data streaming calculation shown in (a) of FIG. 8 includes two independent directed acyclic graphs, and a first task corresponding to a first directed acyclic graph includes four process steps: processing 1, processing 2, processing 3 and processing 4, and a second task corresponding to a second directed acyclic graph includes four processing steps: processing 1, processing 2, processing 5, and processing 6. Here, the processing steps may represent various processes such as acquisition of the data record, the operation, output of the operation result, and the like. When a specific step is executed, respective computing device may implement synchronization function between each other through a packaged function.

According to an exemplary embodiment of the present disclosure, the computing device may search for and merge the same processing steps by analyzing the directed acyclic graphs starting from upstream, for example, assuming that two directed acyclic graphs need to acquire the data record from the same data source, and the original two steps are the same (both are processing 1 and processing 2), then the computing device may first merge the same processing steps to obtain the directed acyclic graph as shown in (b) of FIG. 8. By this way, only the merged directed acyclic graph can be executed, thereby reducing the actual amounts of calculation and the amount of reading and writing, and resulting in performance improvement.

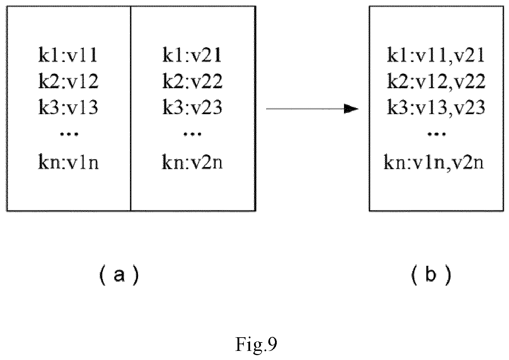

FIG. 9 illustrates an example of storing parameters of the machine learning model in accordance with key-value pairs, according to an exemplary embodiment of the present disclosure. According to an exemplary embodiment of the present disclosure, the numerous parameters of the machine learning model may be stored in a form of the key-value pairs, as an example, when there are multiple sets of key-value pairs (e.g., multiple sets of configurations of the same machine learning algorithm), there is the form of the key-value pairs as shown in (a) of FIG. 9, in which, in each set of configuration, a respective key corresponds to a respective value, for example, k1, k2, k3, ..., kn respectively correspond to v11, v12, V13, ..., vln, or k1, k2, k3, ..., kn respectively correspond to v21, v22, v23, ..., v2n, where n is an integer greater than 1. According to an exemplary embodiment of the present disclosure, the key-value pairs may be stored by merging keys to form the form of the key-value pairs as shown in (b) of FIG. 9, wherein a single key may correspond to a plurality of values, for example, k1 corresponds to both v11 and v21, thereby reducing storage overhead of the parameter memory. On the other hand, merge and/or compression of the keys maybe executed during a transmission process, when related parameters of two configurations need to be interacted between the computing device and the parameter memory, thereby reducing network transmission overhead.

According to an exemplary embodiment of the present disclosure, there is also provided a computer readable storage medium storing a computer program thereon, wherein the computer program, when executed by a parameter memory and a plurality of computing devices, implements the method described in any one of the preceding embodiments.

According to another exemplary embodiment of the present disclosure, there is also provided a system for executing machine learning, wherein the system comprises at least one processor and at least one computer readable storage medium storing computer instructions, wherein the computer instructions, when executed by the at least one processor, cause the at least one processor to implement the method described in any one of the preceding embodiments.

It should be understood that the parameter server, the computing device, or a constituent part such as a device or a unit constituting them in a distributed system according to an exemplary embodiment of the present disclosure may be separately configured to software, hardware, firmware, or any combination thereof that execute a specific function. For example, these component parts may correspond to a dedicated integrated circuit, may also correspond to pure software codes, and may also correspond to modules in which the software and the hardware are combined. When they are implemented in the software, the firmware, middleware or microcode, program codes or code segments for executing a corresponding operation can be stored in a computer readable medium, such as a storage medium, such that a processor can execute the corresponding operation by reading and operating the corresponding program codes or code segments. In addition, one or more functions implemented by these component parts may also be uniformly executed by components in a physical entity apparatus (e.g., a computing machine, etc.).

It should be noted that the distributed machine learning system according to an exemplary embodiment of the present disclosure may implement corresponding functions completely depend on the operation of a computer program, that is, respective component part corresponds to respective step in function architecture of the computer program, such that the entire system is called by a special software package (for example, a lib library) to implement the corresponding functions.

Various exemplary embodiments of the present disclosure have been described above. It should be understood that the above description is exemplary, not exhaustive, and the present disclosure is not limited to the disclosed respective exemplary embodiment. Many modifications and variations will be obvious to those of ordinary skill in the art without departing from the scope and spirit of the present disclosure. Therefore, the scope of the present disclosure should depend on the scope of claims.

## Claims

1. A distributed system for executing machine learning, comprising:
a plurality of computing devices, wherein each computing device is configured to execute data streaming calculation on a machine learning model for respective data records, wherein the data streaming calculation is represented as one or more directed acyclic graphs consisting of processing steps, and each directed acyclic graph is corresponding to a single machine learning model;
a parameter memory configured to maintain parameters of the machine learning model;
wherein the computing device executes an operation on training of the machine learning model for the respective data records using the parameters acquired from the parameter memory when executing the data streaming calculation of training the machine learning model, and the parameter memory updates the parameters according to an operation result of the computing device;
or, the computing device executes the operation on prediction of the machine learning model for the respective data record using the parameters acquired from the parameter memory when executing the data streaming calculation of making the prediction using the machine learning model;
or, the computing device executes the operation on the training of the machine learning model for the respective data record using the parameters acquired from the parameter memory when executing the data streaming calculation of training the machine learning model, and the parameter memory updates the parameters according to an operation result of the computing device; and the computing device executes the operation on the prediction of the machine learning model for the respective data record using the parameters acquired from the parameter memory when executing the data streaming calculation of making the prediction using the machine learning model.

2. The distributed system of claim 1, wherein the parameter memory has a structure of distributed parameter servers, wherein each part parameter server is integrated with a corresponding computing device under the structure of the distributed parameter servers.

3. The distributed system of claim 1, wherein disaster backup is made for each round iteration of the data record when the data streaming calculation of training the machine learning model is executed.

4. The distributed system of claim 1, wherein the data record corresponds to part or all of the parameters of the machine learning model.

5. The distributed system of claim 1, wherein the computing device executes the data streaming calculation by merging the same processing steps in different directed acyclic graphs.

6. The distributed system of claim 1, wherein the parameter memory stores the parameters of the machine learning model in accordance with key-value pairs, and the key-value pairs having the same key are stored in a form in which a single key corresponds to a plurality of values.

7. The distributed system of claim 1, wherein the parameter memory comprises: an interface device, a processing device, and a parameter storage device;
the interface device configured to receive an instruction requesting acquisition of the parameters from the computing device and transmit corresponding parameters to the computing device; or configured to receive the instruction requesting the acquisition of the parameters from the computing device, transmit related parameters to the computing device, and receive an operation result for updating the parameters and a related instruction from the computing device;
the processing device configured to analyze the instruction requesting the acquisition of the parameters from the computing device, and provide the corresponding parameters from the parameter storage device to the interface device; or configured to analyze the instruction requesting the acquisition of the parameter from the computing device and provide the corresponding parameters from the parameter storage device to the interface device, and configured to analyze the operation result for updating the parameters and the related instruction from the computing device, execute updating of the parameters according to a corresponding parameter updating manner, and store the updated parameters in the parameter storage device;
the parameter storage device configured to store the parameters of the machine learning model.

8. The distributed system of claim 1, wherein the computing device comprises an interface unit and an operation unit,
the interface unit is configured to transmit an instruction requesting acquisition of the parameters to the parameter memory and receive requested corresponding parameters from the parameter memory; or configured to transmit the instruction requesting the acquisition of the parameters to the parameter memory and receive the requested corresponding parameters from the parameter memory, and configured to provide an operation result for updating the parameters and a related instruction to the parameter memory; and
the operation unit is configured to execute the data streaming calculation for the data record using the parameters of the machine learning model.

9. A method of executing machine learning using a distributed system, wherein each of a plurality of computing devices in the distributed system is configured to execute data streaming calculation on a machine learning model for a respective data record, wherein the data streaming calculation is represented as one or more directed acyclic graphs consisting of processing steps, and each directed acyclic graph is corresponding to a single machine learning model, the method comprising:
acquiring the respective data record by each of the plurality of computing devices;
acquiring parameters of the machine learning model from a parameter memory in the distributed system by the computing device;
wherein an operation on training of the machine learning model is executed by the computing device for the respective data record using the acquired parameters when executing the data streaming calculation of training the machine learning model, and the parameters are updated by the parameter memory according to an operation result of the computing device;
or, the operation on prediction of the machine learning model is executed by the computing device for the respective data record using the acquired parameters when executing the data streaming calculation of making the prediction using the machine learning model;
or, the operation on the training of the machine learning model is executed by the computing device for the respective data record using the acquired parameters when executing the data streaming calculation of training the machine learning model, and the parameters are updated by the parameter memory according to an operation result of the computing device; and the operation on the prediction of the machine learning model is executed by the computing device for the respective data record using the acquired parameters when executing the data streaming calculation of making the prediction using the machine learning model.

10. The method of claim 9, wherein the parameter memory has a structure of distributed parameter servers, wherein each part parameter server is integrated with a corresponding computing device under the structure of the distributed parameter servers.

11. The method of claim 9, wherein disaster backup is made for each round iteration of the data record when the data streaming calculation of training the machine learning model is executed.

12. The method of claim 9, wherein the data record corresponds to part or all of the parameters of the machine learning model.

13. The method of claim 9, wherein the computing device executes the data streaming calculation by merging the same processing steps in different directed acyclic graphs.

14. The method of claim 9, wherein the parameter memory stores the parameters of the machine learning model in accordance with key-value pairs, and the key-value pairs having the same key are stored in a form in which a single key corresponds to a plurality of values.

15. A computer readable storage medium storing a computer program thereon, wherein the computer program, when executed by a parameter memory and a plurality of computing devices, implements the method of any one of claims 9 to 14.

16. A system for executing machine learning, wherein the system comprises at least one processor and at least one computer readable storage medium storing computer instructions, wherein the computer instructions, when executed by the at least one processor, cause the at least one processor to implement the method of any one of claims 9 to 14.
